# EUROPÄISCHE PATENTANMELDUNG

(11) **EP 2 284 324 A1**
(43) Veröffentlichungstag der Anmeldung: **16.02.2011**
(21) Anmeldenummer: 10011866.0
(22) Anmeldetag: 21.11.2005
(51) Int. Cl.: E04B 1/80, E04B 1/90

(54) **Dämmplatte und Verfahren zu ihrer Herstellung**

(30) Priorität: 22.11.2004 DE 102004056335
(62) Teilanmeldung aus: 05807392.5
(71) Anmelder: Knauf Dämmstoffe GmbH, 59329 Wadersloh-Liesborn (DE)
(72) Erfinder: Zimpfer, Harald, 97265 Hettstadt (DE); Seemann, Andreas, 59514 Welver (DE); Münder, Kurt, 59555 Lippstadt (DE); Tump, Michael, 57462 Olpe (DE)
(74) Vertreter: Müller-Boré & Partner Patentanwälte

(57) **Zusammenfassung**

Die vorliegende Erfindung betrifft eine Dämmplatte zur Wärmeisolierung ("Wärmedämmplatte"), insbesondere von Aussenfassaden und Dächern von Gebäuden, bestehend aus zwei Teilen (1, 2), wobei der der zu isolierenden Fläche zugewandte innere Teil (1) der Wärmedämmplatte (6) die wesentliche Dämmwirkung erbringt, während der nach aussen weisende Teil (2) der Wärmedämmplatte (6) eine zusätzliche Schutzfunktion erfüllt, **dadurch gekennzeichnet, dass** der innere Teil der Wärmedämmplatte eine Dämmplatte (1) aus einem grauen expandierten Polystyrol (EPS) mit einem Zusatz von athermanen Stoffen, insbesondere Infrarotabsorbern bzw. -reflektoren, ist und dass der äussere Teil der Wärmedämmplatte eine dünnere Dämmplatte (2) aus einem weissen expandierten Polystyrol (EPS) ist, das im Wesentlichen frei von athermanen Bestandteilen ist und ein geringeres Dämmvermögen als die graue innere Dämmplatte (1) aufweist.

## Beschreibung

Die Erfindung betrifft eine Dämmplatte, insbesondere zur Isolierung von Außenfassaden, Dächern, Wänden und Decken von Gebäuden, bestehend aus zwei Teilen, wobei der eine Teil der Dämmplatte die wesentliche Dämmwirkung erbringt, während der andere Teil der Dämmplatte eine zusätzliche Schutzfunktion erfüllt, insbesondere eine Wärmedämmplatte und eine akustische Schalldämmplatte, sowie ein Verfahren zu ihrer Herstellung.

Dämmmaterialien auf Basis von expandierbarem Polystyrol (EPS) sind seit langer Zeit bekannt und haben sich aufgrund ihrer Wärmeformbeständigkeit und ihrer vergleichsweise geringen Wärmeleitfähigkeit für verschiedene Anwendungen wie der Wärmedämmung von Gebäuden bewährt. Üblicherweise werden die Dämmmaterialien in Form von quaderförmigen Platten je nach den örtlichen Gegebenheiten und dem Anwendungszweck auf der Außen- oder Innenseite der zu isolierenden Gebäudewand angebracht und anschließend mit Putz beschichtet.

Die Wärmedämmung von aufgeschäumtem Polystyrol beruht auf seinem Aufbau aus einer Vielzahl an Polystyrolzellen, in denen Luft, die eine geringe Wärmeleitfähigkeit aufweist, fein verteilt ist, wobei diese Luft im Gegensatz zu Schaumstoffen in den Zellen verbleibt, so dass die Dämmwirkung über die Zeit konstant bleibt. Es ist bekannt, dass die Wärmeleitfähigkeit von Polystyrolschaum im Wesentlichen von der Rohdichte des fertigen Polystyrol-Hartschaums abhängt, wobei mit zunehmender Rohdichte die Wärmeleitfähigkeit abnimmt bzw. die Wärmedämmung zunimmt. Allerdings weist die Wärmeleitfähigkeit von Polystyrolschaum zwischen 30 und 50 kg/m³ ein Minimum auf, so dass eine darüber hinausgehende Erhöhung der Rohdichte nicht zu einer weiteren Senkung, sondern vielmehr zu einem Anstieg der Wärmeleitfähigkeit führt.

Eine Verringerung der Strahlungsdurchlässigkeit und damit eine Verbesserung der Wärmedämmung konnte lange Zeit nur durch Erhöhung der Rohdichte erreicht werden. Um die Wärmeleitfähigkeitswerte von expandiertem Polystyrol-Hartschaum bei gegebener Raumdichte zu verringern, ist bereits vorgeschlagen worden, den Materialien athermane Stoffe, d.h. wärmeabsorbierende, insbesondere Infrarotstrahlung absorbierende Verbindungen zuzufügen. So sind aus der EP 0 620 246 B1 Formkörper aus Polystyrol-Partikelschaum mit einer Rohdichte von weniger als 20 kg/m³ bekannt, welche 0,5 bis 5 Gew.-% eines athermanen Materials, vorzugsweise ein Metalloxid, Nichtmetalloxid, Ruß, Graphit und/oder Aluminiumpulver, enthalten. Zur Herstellung dieser Formkörper wird dem noch nicht aufgeschäumten Polystyrolgranulat das athermane Material als Additiv zugegeben oder das athermane Material wird auf die vorgeschäumten Polystyrolschaum-Partikel aufgebracht, bevor diese zu Formkörpern verschweißt werden. Weitere Verfahren zur Herstellung solcher Materialien sind in der EP 1 142 942 A2 und der EP 1 159 338 B1 beschrieben. Durch die athermanen, d.h. infrarotreflektierenden Zusätze ist die Farbe des entsprechenden Granulats und damit auch der aufgeschäumten Perlen grau. Der graue Polystyrol-Hartschaum weist eine wesentlich geringere Wärmeleitfähigkeit als weißer Polystyrolschaum gleicher Rohdichte auf, so dass bei grauem Polystyrol-Hartschaum mit weniger Rohstoffeinsatz die gleiche Dämmleistung erzielt werden kann wie mit weißem Polystyrol-Hartschaum.

Ein Nachteil des grauen Materials ist jedoch, dass die zur Zeit auf dem Markt verwendeten grauen Dämmplatten aus expandierbarem Polystyrol, nachfolgend kurz EPS-Dämmplatten genannt, bei Sonneneinstrahlung starke Veränderungen in der Längenausdehnung zeigen. Der Grund hierfür liegt in der Aufheizung der grauen Oberfläche auf ca. 50° C bis 65°C, je nach Rohstoff. Dieser Aufheizeffekt bewirkt ein Aufwölben der Dämmplatten, was zum Ablösen der Platten vom Untergrund oder zu einer Wölbung der Fassadenfläche führen kann. Der Aufheizeffekt wirkt sowohl im Sommer bei hoch stehender Sonne als auch im Winter bei tief stehender Sonne. Aus diesem Grund werden die zu isolierenden Fassaden während des Anbringens der grauen EPS-Dämmplatten bis nach deren Verputzen großflächig mit Gerüstplanen bzw. Gerüstnetzen abgehängt und verschattet.

In der DE 82 26 114 U ist bereits eine kombinierte Wärmedämmplatte vorgeschlagen worden, bei der die äußere Schutzschicht aus einem anorganischen Fasermaterial besteht, um die eigentliche Dämmplatte u.a. gegen Wärmestrahlen zu schützen. Eine solche Dämmplatte ist jedoch nicht dazu geeignet, als Teil eines Wärmedämmverbundsystems (WDVS) zur Isolierung von Hausfassaden oder dgl. zu dienen.

Die grauen EPS-Dämmplatten ermöglichen zwar eine gute Wärmedämmung, sie sind im übrigen aber für sonstige Schutzfunktionen, wie z.B. Schallschutz, weniger geeignet.

Aufgabe der vorliegenden Erfindung ist es daher, eine Dämmplatte der eingangs genannten Art zu schaffen, mit der man sowohl ein hohe Wärmedämmleistung als auch die Vorteile weißer Dämmplatten oder sonstiger Spezialdämmplatten erzielt, sowie ein Verfahren zu ihrer Herstellung zur Verfügung zu stellen.

Diese Aufgabe wird im Wesentlichen dadurch gelöst, dass der Teil der Dämmplatte, der die wesentliche Dämmwirkung erbringt, aus einem grauen expandierten Polystyrol (EPS) mit einem Zusatz von athermanen Stoffen, insbesondere Infrarotabsorbern bzw. -reflektoren, besteht und dass der andere Teil der Dämmplatte aus einem Kunststoff-Hartschaum mit wenigstens einer weiteren Schutzeigenschaft besteht.

Bei einer Dämmplatte, die zur Wärmeisolierung insbesondere von Außenfassaden und Dächern von Gebäuden dient ("Wärmedämmplatte") und die aus zwei Teilen besteht, wobei der der zu isolierenden Fläche zugewandte innere Teil der Wärmedämmplatte die wesentliche Dämmwirkung erbringt, während der nach außen weisende Teil der Wärmedämmplatte eine zusätzliche Schutzfunktion erfüllt, ist erfindungsgemäß vorgesehen, dass der innere Teil der Wärmedämmplatte eine Dämmplatte aus einem grauen expandierten Polystyrol (EPS) mit einem Zusatz von athermanen Stoffen, insbesondere Infrarotabsorbern bzw. - reflektoren, ist und dass der äußere Teil der Wärmedämmplatte eine dünnere Dämmplatte aus einem weißen extrudierten Polystyrol (EPS) ist, das im Wesentlichen frei von athermanen Bestandteilen ist und ein geringeres Dämmvermögen als die graue innere Dämmplatte aufweist. Durch die Verbindung einer grauen inneren EPS-Dämmplatte geringer Wärmeleitfähigkeit mit einer dünnen weißen äußeren EPS-Dämmplatte lassen sich die guten Wärmedämmeigenschaften der grauen EPS-Dämmplatte mit dem günstigen Oberflächentemperaturverhalten einer weißen EPS-Dämmplatte vereinen. Aufgrund der weißen Außenseite bleibt die erfindungsgemäße Wärmedämmplatte auch bei hohen Temperaturen und bei direkter Sonnenbetrahlung formstabil und ist problemlos zu verarbeiten. Ein nachträgliches Schüsseln oder Schrumpfen findet nicht statt. Auch kann das aufwändige Abhängen und Verschatten des Gerüstes entfallen.

Während die graue EPS-Dämmplatte athermane Zusätze enthält, die infrarotabsorbierend sind, ist die weiße EPS-Dämmplatte im Wesentlichen frei von athermanem Material, wobei im Wesentlichen frei im Sinne der vorliegenden Erfindung einen Gehalt von bis zu 0,5 Gew.-% bedeutet. Besonders gute Ergebnisse werden jedoch erhalten, wenn die weiße EPS-Dämmplatte weniger als 0,2 Gew.-% und besonders bevorzugt gar kein athermanes Material enthält.

Das athermane Material der grauen EPS-Dämmplatte ist zweckmäßigerweise aus der aus Graphit, Ruß, Metallpulver, bspw. Aluminiumpulver, Metalloxiden, bspw. Eisen(III)oxid oder Aluminiumoxid, Nichtmetalloxiden, bspw. Siliziumdioxid, und Kombinationen hieraus bestehenden Gruppe ausgewählt. Die Einarbeitung des athermanen Materials in das Polystyrol kann auf jede dem Fachmann bekannte Weise, bspw. mit einem der in den EP 0 620 246 B1, EP 1 142 942 A2 oder EP 1 159 338 B1, die hiermit als Referenz eingeführt und als Teil der Offenbarung gelten, beschriebenen Verfahren, erfolgen.

Gemäß einer bevorzugten Ausgestaltung der Erfindung ist die graue innere EPS-Dämmplatte der kombinierten Wärmedämmplatte einer Wärmeleitfähigkeitsgruppe (WLG) zwischen 025 und 035 zugeordnet, während die weiße äußere EPS-Dämmplatte einer Wärmeleitfähigkeitsgruppe (WLG) zwischen 030 und 050, insbesondere einer WLG 040 zugeordnet ist.

Zur Erzielung einer optimalen Wärmedämmung weist die graue innere EPS-Dämmplatte vorzugsweise eine Dicke größer 20 mm, insbesondere eine Dicke zwischen 50 mm und 200 mm auf. Da eine gute Formbeständigkeit des Dämmmaterials auch bei intensiver direkter Sonneneinstrahlung bereits mit einer weniger als 1 mm dicken Schicht aus weißem Polystyrol-Hartschaum erhalten wird, und um die Gesamtdicke der erfindungsgemäßen Wärmedämmplatte daher möglichst gering zu halten, weist die äußere weiße EPS-Dämmplatte lediglich eine Dicke von 1 mm bis 20 mm, vorzugsweise eine Dicke von 5 mm auf.

Die erfindungsgemäße Wärmedämmplatte lässt sich einer Wärmeleitfähigkeitsgruppe (WLG) zwischen 030 und 040, insbesondere der WLG 035 zuordnen.

Soll die graue EPS-Dämmplatte als "Schalldämmplatte" dienen, d.h. Wände und Decke von Gebäuden nicht nur wärmemäßig, sondern auch akustisch isolieren, so ist der innere Teil der Schalldämmplatte eine aus einem grauen expandierten Polystyrol (EPS) bestehende Kunststoff-Hartschaumplatte mit einem Zusatz von athermanen Stoffen, insbesondere Infrarotabsorbern bzw. -reflektoren, und der äußere Teil der Schalldämmplatte ist eine akustische Dämmplatte, ebenfalls aus einem Kunststoff-Hartschaum, die erfindungsgemäß eingerichtet ist, einen zusätzlichen akustischen Schallschutz zu erzielen. Dies erfolgt zweckmäßigerweise dadurch, dass die Dämmplatte, die einen zusätzlichen Schallschutz ermöglicht, eine schallabsorbierende Oberflächenstruktur aufweist.

Grundsätzlich lassen sich die beiden Kunststoff-Hartschaum-Platten der erfindungsgemäßen Dämmplatten, unabhängig davon, ob es sich um eine reine Wärmedämmplatte oder eine Schalldämmplatte handelt, auf jede dem Fachmann bekannte Weise miteinander verbinden. Dies kann bspw. mittels Kiebstoff erfolgen, wobei lösungsmittelfreie Klebstoffe bevorzugt sind, um die Gefahr eines partiellen Auflösens der Oberflächen der beiden Polystyrolschichten durch Lösungsmittel auszuschließen. Es hat sich aber als besonders vorteilhaft erwiesen, wenn die inneren und die äußeren Kunststoff-Hartschaum-Platten thermisch miteinander verbunden sind.

Das erfindungsgemäße Verfahren zum Verbinden zweier Kunststoff-Hartschaum-Platten, insbesondere Polystyrol-Hartschaumstoff-Dämmplatten, zur einer kombinierten Dämmplatte, insbesondere einer Wärmedämmplatte oder einer Schalldämmplatte, sieht vor, dass die zu verbindenden Schaumstoffplatten zunächst aneinander anliegend angeordnet werden, dass danach erhitzte Metallnadeln über die Fläche der Schaumstoffplatten gleichmäßig verteilt an zahlreichen Stellen durch die eine der beiden Schaumstoffplatten hindurch bis in die andere Schaumstoffplatte hinein gestochen werden und dass die Metallnadeln nach dem thermischen Verschweißen der Kontaktflächen zwischen den aneinander anliegenden Schaumstoffplatten wieder aus den beiden Schaumstoffplatten herausgezogen werden.

Besonders gute Ergebnisse werden mit diesem Verfahren erzielt, wenn die beiden miteinander zu verbindenden Schaumstoffplatten aus expandiertem Polystyrol (EPS) bestehen.

Um eine ausreichend feste Verbindung der beiden Kunststoffschichten zu erreichen, wird in Weiterbildung dieses Erfindungsgedankens vorgeschlagen, die heißen Nadeln mindestens 1 mm, bevorzugt jedoch mindestens 5 mm in die andere aufnehmende Kunststoff-Hartschaum-Platte zu stechen. Die Eintauchtiefe der heißen Nadeln in die andere Schaumstoffplatte, die Temperatur der heißen Nadeln sowie deren Verweilzeit in der andere Schaumstoffplatte vor dem Herausziehen der Nadeln hängen von den eingesetzten Kunststoffmaterialien und der gewünschten Festigkeit der Verbindung ab und können im Rahmen routinemäßiger Versuche einfach bestimmt werden.

Aufgrund des Verschmelzens einer Vielzahl von Kontaktflächen zwischen den beiden Schaumstoffplatten durch die an einer Aufnahme in Form eines Punktrasters angeordneten Nadein werden die beiden Schaumstoffplatten erfindungsgemäß thermisch miteinander verbunden.

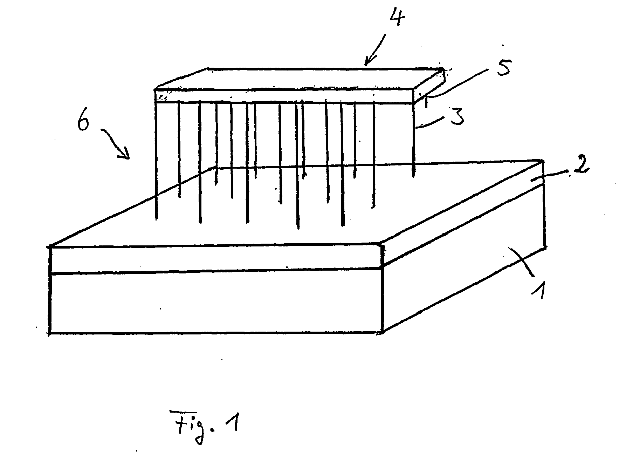

Die Erfindung wird nachfolgend an einem Ausführungsbeispiel in Form einer Wärmedämmplatte und der Zeichnung näher beschrieben. Weitere erfindungsgemäße Merkmale sowie vorteilhafte Ausgestaltungen der erfindungsgemäßen Dämmplatte sind in den Neben- bzw. Unteransprüchen aufgeführt. So ist die Erfindung nicht auf Wärmedämmplatten und Schalldämmplatten beschränkt, sondern erfasst alle Anwendungen einer grauen EPS-Dämmplatte mit weiteren Kunststoff-Hartschaum-Platten, die zusätzliche Nutzen und Vorteile bringen.

Die einzige Figur zeigt schematisch den Verfahrensschritt der thermischen Verbindung zweier Dämmplatten aus expandierbarem Polystyrol (EPS).

Zwei aneinander anliegende EPS-Dämmplatten 1 und 2 auf Basis von Polystyrolschaum, von denen nur die graue EPS-Dämmplatte 1 ein athermanes Material, bspw. Aluminium in einer Menge von 2 Gew.-%, enthält, werden thermisch miteinander verbunden, indem durch die andere weiße EPS-Dämmplatte 2 hindurch eine Vielzahl von untereinander in Form eines Punktrasters angeordnete erhitzte Nadeln 3 aus Metall bis in die graue EPS-Dämmplatte 1 gestochen, dort für eine vorbestimmte Zeit belassen und anschließend wieder herausgezogen werden. Die Nadein 3 sind auf einer nur schematisch dargestellten Halte- und Heizplatte 4 angeordnet, durch die sie auf die notwendigen Temperaturen aufgeheizt werden. An der Unterseite der Halteplatte 4 ist eine Isolierung, insbesondere in Form einer Isolierplatte 5 aus thermisch nicht leitendem Material, vorgesehen, um zu verhindern, dass nach dem Herunterdrücken der Halteplatte 4 Wärme von der Halteplatte 4 auf die der Halteplatte 4 zugesandten Oberfläche der weißen EPS-Dämmplatte 2 der Wärmedämmplatte 6 übertritt und diese damit beschädigt. Die Hitze wird also nur über die Nadeln übertragen.

Durch die thermische Verbindung wird eine feste Verbindung zwischen den beiden Kunststoff-Hartschaum-Platten 1 und 2 sichergestellt.

Die vorliegende Erfindung beinhaltet auch die folgenden Aspekte:
Aspekt 1:
   Dämmplatte, insbesondere zur Isolierung von Fassaden, Dächern, Wänden und Decken von Gebäuden, bestehend aus zwei Teilen (1, 2), wobei der eine Teil der Dämmplatte die wesentliche Dämmwirkung erbringt, während der andere Teil der Dämmplatte eine zusätzliche Schutzfunktion erfüllt, **dadurch gekennzeichnet, dass** der Teil der Dämmplatte, der die wesentliche Dämmwirkung erbringt, aus einem grauen expandierten Polystyrol (EPS) mit einem Zusatz von athermanen Stoffen, insbesondere Infrarotabsorbern bzw. -reflektoren, besteht und dass der andere Teil der Dämmplatte aus einem Kunststoff-Hartschaum mit wenigstens einer weiteren Schutzeigenschaft besteht.
Aspekt 2:
   Dämmplatte nach Aspekt 1, **dadurch gekennzeichnet, dass** das athermane Material der inneren EPS-Dämmplatte (1) aus der aus Graphit, Ruß, Metallpulver, bspw. Aluminiumpulver, Metalloxiden, bspw. Eisen(III)oxid oder Aluminiumoxid, Nichtmetalloxiden, bspw. Siliziumdioxid, und Kombinationen hieraus bestehenden Gruppe ausgewählt ist.
Aspekt 3:
   Dämmplatte nach Aspekt 1 oder 2, **dadurch gekennzeichnet, dass** die die Dämmplatte (6) bildende innere und die äussere Kunststoff-Hartschaumplatte (1, 2) thermisch miteinander verbunden sind.
Aspekt 4:
   Dämmplatte zur Wärmeisolierung ("Wärmedämmplatte"), insbesondere von Aussenfassaden und Dächern von Gebäuden, insbesondere nach einem der Aspekte 1 bis 3, bestehend aus zwei Teilen (1, 2), wobei der der zu isolierenden Fläche zugewandte innere Teil (1) der Wärmedämmplatte (6) die wesentliche Dämmwirkung erbringt, während der nach außen weisende Teil (2) der Wärmedämmplatte (6) eine zusätzliche Schutzfunktion erfüllt, **dadurch gekennzeichnet, dass** der innere Teil der Wärmedämmplatte eine Dämmplatte (1) aus einem grauen expandierten Polystyrol (EPS) mit einem Zusatz von athermanen Stoffen, insbesondere Infrarotabsorbern bzw. -reflektoren, ist und dass der äußere Teil der Wärmedämmplatte eine dünnere Dämmplatte (2) aus einem weißen extrudierten Polystyrol (EPS) ist, das im Wesentlichen frei von athermanen Bestandteilen ist und ein geringeres Dämmvermögen als die graue innere Dämmplatte (1) aufweist.
Aspekt 5:
   Wärmedämmplatte nach Aspekt 4, **dadurch gekennzeichnet, dass** die graue innere EPS-Dämmplatte (1) einer Wärmeleitfähigkeitsgruppe (WLG) zwischen 025 und 035 zugeordnet ist.
Aspekt 6:
   Wärmedämmplatte nach Aspekt 4, **dadurch gekennzeichnet, dass** die weiße äußere EPS-Dämmplatte (2) einer Wärmeleitfähigkeitsgruppe (WLG) zwischen 030 und 050, insbesondere einer WLG 040 zugeordnet ist.
Aspekt 7:
   Wärmedämmplatte nach einem der Aspekte 4 oder 5, **dadurch gekennzeichnet, dass** die graue innere EPS-Dämmplatte (1) eine Dicke grösser 20 mm, insbesondere eine Dicke zwischen 50 mm und 200 mm aufweist.
Aspekt 8:
   Wärmedämmplatte nach einem der Aspekte 4 oder 6, **dadurch gekennzeichnet, dass** die die weiße äußere EPS-Dämmplatte (2) eine Dicke von 1 mm bis 20 mm, insbesondere eine Dicke von 5 mm aufweist.
Aspekt 9:
   Wärmedämmplatte nach einem der Aspekte 4 bis 8, **dadurch gekennzeichnet, dass** die kombinierte Wärmedämmplatte einer Wärmeleitfähigkeitsgruppe (WLG) zwischen 030 und 040, insbesondere der WLG 035 zugeordnet ist.
Aspekt 10: Dämmplatte zur Schallisolierung ("Schalldämmplatte"), insbesondere von Wänden und Decken in Gebäuden, insbesondere nach einem der Aspekte 1 bis 3, bestehend aus zwei Teilen, wobei der der zu isolierenden Fläche zugewandte innere Teil (1 ) der Schalldämmplatte (6) die wesentliche Dämmwirkung erbringt, während der nach aussen weisende Teil (2) der Schalldämmplatte (6) eine zusätzliche Schutzfunktion erfüllt, **dadurch gekennzeichnet, dass** der innere Teil der Schalldämmplatte eine Dämmplatte (1) aus einem grauen expandierten Polystyrol (EPS) mit einem Zusatz von athermanen Stoffen, insbesondere Infrarotabsorbern bzw. -reflektoren, ist und dass der äußere Teil der Schalldämmplatte eine akustische Dämmplatte aus einem Kunststoff-Hartschaum ist, die eingerichtet ist, einen zusätzlichen akustischen Schallschutz zu erzielen.
Aspekt 11:
   Schalldämmplatte nach Aspekt 10, **dadurch gekennzeichnet, dass** die Dämmplatte, die einen zusätzlichen Schallschutz ermöglicht, eine schallabsorbierende Oberflächenstruktur aufweist.
Aspekt 12:
   Verfahren zum Verbinden zweier Schaumstoffplatten zu einer Dämmplatte, insbesondere zur Herstellung einer kombinierten Dämmplatte nach einem der Aspekte 1 bis 3, einer Wärmedämmplatte nach einem der Aspekte 4 bis 9 oder einer Schalldämmplatte nach Aspekt 10 oder 11, **dadurch gekennzeichnet, dass** die miteinander zu verbindenden Schaumstoffplatten aneinander anliegend angeordnet werden, dass danach erhitzte Metallnadeln über die Fläche der Schaumstoffplatten verteilt an mehreren Stellen durch die eine der beiden Schaumstoffplatten hindurch bis in die andere Schaumstoffplatte hinein gestochen werden und dass die Metallnadeln nach dem thermischen Verschweissen der Kontaktflächen zwischen den aneinander anliegenden Schaumstoffplatten wieder aus beiden Schaumstoffplatten herausgezogen werden ("Thermische Verschweissung").
Aspekt 13:
   Verfahren nach Aspekt 12, **dadurch gekennzeichnet, dass** die miteinander zu verschweissenden Schaumstoffplatten (1, 2) aus expandiertem Polystyrol (EPS) bestehen.
Aspekt 14:
   Verfahren nach Aspekt 12 oder 13, **dadurch gekennzeichnet, dass** die erhitzten Metallnadeln (3) mindestens 1 mm, bevorzugt mindestens 5 mm in die andere Kunststoff-Hartschaumplatte (1) hinein gestochen werden.
Aspekt 15:
   Verfahren nach einem der Aspekte 12 bis 14, **dadurch gekennzeichnet, dass** die beiden Schaumstoffplatten (1, 2) aufgrund des Verschmelzens einer Vielzahl von Kontaktflächen zwischen den beiden Schaumstoffplatten durch die an einer Aufnahme in Form eines Punktrasters angeordneten Nadeln (3) thermisch miteinander verbunden werden.

## Patentansprüche

1. Dämmplatte zur Wärmeisolierung ("Wärmedämmplatte"), insbesondere von Aussenfassaden und Dächern von Gebäuden, bestehend aus zwei Teilen (1, 2), wobei der der zu isolierenden Fläche zugewandte innere Teil (1) der Wärmedämmplatte (6) die wesentliche Dämmwirkung erbringt, während der nach aussen weisende Teil (2) der Wärmedämmplatte (6) eine zusätzliche Schutzfunktion erfüllt, **dadurch gekennzeichnet, dass** der innere Teil der Wärmedämmplatte eine Dämmplatte (1) aus einem grauen expandierten Polystyrol (EPS) mit einem Zusatz von athermanen Stoffen, insbesondere Infrarotabsorbern bzw. -reflektoren, ist und dass der äussere Teil der Wärmedämmplatte eine dünnere Dämmplatte (2) aus einem weissen expandierten Polystyrol (EPS) ist, das im Wesentlichen frei von athermanen Bestandteilen ist und ein geringeres Dämmvermögen als die graue innere Dämmplatte (1) aufweist.

2. Wärmedämmplatte nach Anspruch 1, **dadurch gekennzeichnet, dass** die graue innere EPS-Dämmplatte (1) einer Wärmeleitfähigkeitsgruppe (WLG) zwischen 025 und 035 zugeordnet ist.

3. Wärmedämmplatte nach Anspruch 1, **dadurch gekennzeichnet, dass** die weisse äussere EPS-Dämmplatte (2) einer Wärmeleitfähigkeitsgruppe (WLG) zwischen 030 und 050, insbesondere einer WLG 040 zugeordnet ist.

4. Wärmedämmplatte nach einem der Ansprüche 1 oder 2, **dadurch gekennzeichnet, dass** die graue innere EPS-Dämmplatte (1) eine Dicke grösser 20 mm, insbesondere eine Dicke zwischen 50 mm und 200 mm aufweist.

5. Wärmedämmplatte nach einem der Ansprüche 1 oder 3, **dadurch gekennzeichnet, dass** die weisse äussere EPS-Dämmplatte (2) eine Dicke von 1 mm bis 20 mm, insbesondere eine Dicke von 5 mm aufweist.

6. Wärmedämmplatte nach einem der Ansprüche 1 bis 5, **dadurch gekennzeichnet, dass** die kombinierte Wärmedämmplatte einer Wärmeleitfähigkeitsgruppe (WLG) zwischen 030 und 040, insbesondere der WLG 035 zugeordnet ist.

7. Verfahren zum Verbinden zweier Schaumstoffplatten zu einer Dämmplatte, insbesondere zur Herstellung einer Wärmedämmplatte nach einem der Ansprüche 1 bis 6, **dadurch gekennzeichnet, dass** die miteinander zu verbindenden Schaumstoffplatten aneinander anliegend angeordnet werden, dass danach erhitzte Metallnadeln über die Fläche der Schaumstoffplatten verteilt an mehreren Stellen durch die eine der beiden Schaumstoffplatten hindurch bis in die andere Schaumstoffplatte hinein gestochen werden und dass die Metallnadeln nach dem thermischen Verschweissen der Kontaktflächen zwischen den aneinander anliegenden Schaumstoffplatten wieder aus beiden Schaumstoffplatten herausgezogen werden ("Thermische Verschweissung").

8. Verfahren nach Anspruch 7, **dadurch gekennzeichnet, dass** die miteinander zu verschweissenden Schaumstoffplatten (1, 2) aus expandiertem Polystyrol (EPS) bestehen.

9. Verfahren nach Anspruch 7 oder 8, **dadurch gekennzeichnet, dass** die erhitzten Metallnadeln (3) mindestens 1 mm, bevorzugt mindestens 5 mm in die andere Kunststoff-Hartschaum-Platte (1) hinein gestochen werden.

10. Verfahren nach einem der Ansprüche 7 bis 9, **dadurch gekennzeichnet, dass** die beiden Schaumstoffplatten (1, 2) aufgrund des Verschmelzens einer Vielzahl von Kontaktflächen zwischen den beiden Schaumstoffplatten durch die an einer Aufnahme in Form eines Punktrasters angeordneten Nadeln (3) thermisch miteinander verbunden werden.
